# EUROPÄISCHE PATENTSCHRIFT

(11) **EP 1 861 449 B1**
(45) Veröffentlichungstag und Bekanntmachung des Hinweises auf die Patenterteilung: **07.04.2010**
(21) Anmeldenummer: 06704129.3
(22) Anmeldetag: 28.01.2006
(51) Int. Cl.: C08G 59/42, C08G 59/30

(54) **EPOXID- UND SILANGRUPPEN ENTHALTENDE OLIGOMERE UND POLYMERE, VERFAHREN ZU IHRER HERSTELLUNG UND IHRE VERWENDUNG**
EPOXY AND SILANE GROUP-CONTAINING OLIGOMERS AND POLYMERS A METHOD FOR THE PRODUCTION AND THE USE THEREOF
OLIGOMERES ET POLYMERES CONTENANT DES GROUPES EPOXY ET SILANE, LEUR PROCEDE DE PRODUCTION ET LEUR UTILISATION

(30) Priorität: 18.03.2005 DE 102005012457
(43) Veröffentlichungstag der Anmeldung: 05.12.2007
(73) Patentinhaber: BASF Coatings AG, 48165 Münster (DE)
(72) Erfinder: POPPE, Andreas, 48324 Sendenhorst (DE); MIKOLAJETZ, Dunja, 59387 Ascheberg (DE)
(74) Vertreter: Leifert & Steffan
(86) Internationale Anmeldenummer: PCT/EP2006/050568
(87) Internationale Veröffentlichungsnummer: WO 2006/097387

(56) Entgegenhaltungen:
- DE-A1- 3 839 215
- DE-A1- 4 020 316
- US-A- 5 350 811

## Beschreibung

Die vorliegende Erfindung betrifft neue Epoxid- und Silangruppen enthaltende Oligomere und Polymere. Außerdem betrifft die vorliegende Erfindung ein neues Verfahren zur Herstellung von Epoxid- und Silangruppen enthaltenden Oligomeren und Polymeren. Des Weiteren betrifft die vorliegende Erfindung die Verwendung der neuen Epoxid- und Silangruppen enthaltenden Oligomeren und Polymeren und der mit Hilfe des neuen Verfahrens hergestellten Epoxid- und Silangruppen enthaltenden Oligomeren und Polymeren für die Herstellung von wasserfreien härtbaren Gemischen.

Epoxid- und Silangruppen enthaltende Oligomere und Polymere sind beispielsweise aus der deutschen Patentanmeldung DE 38 39 215 A1 und dem amerikanischen Patent US 4,772,672 bekannt. Sie werden durch die radikalische Copolymerisation von Epoxidgruppen und Silangruppen enthaltenden Monomeren hergestellt.

Die bekannten Epoxid- und Silangruppen enthaltenden Oligomeren und Polymeren dienen der Herstellung von wasserfreien, thermisch härtbaren Beschichtungsstoffen. Die bekannten wasserfreien, thermisch härtbaren Beschichtungsstoffe enthalten Aluminium-, Titan- oder Zirkoniumchelatverbindungen als Katalysatoren der thermischen Härtung.

Die bekannten, wasserfreien, thermisch härtbaren Beschichtungsstoffe weisen eine lange Topfzeit auf und liefern Beschichtungen, die schlagfest, wasserbeständig, witterungsbeständig, chemikalienbeständig, frei von inneren Schrumpfungen und gut überlackierbar sind. Allerdings lässt die Kratzfestigkeit der bekannten Beschichtungen stark zu wünschen übrig.

Aus der deutschen Patentanmeldung DE 100 18 935 A1 sind wasserfreie, thermisch härtbare Beschichtungsstoffe bekannt, die Epoxidgruppen enthaltende niedermolekulare Verbindungen, Oligomere und Polymere sowie Anhydride als Härter enthalten. Diese bekannten Beschichtungsstoffe liefern Beschichtungen, die zwar eine hohe Substrat- und Zwischenschichthaftung aufweisen, deren Kratzfestigkeit aber ebenfalls stark zu wünschen übrig lässt. Sie eignen sich deshalb nur zur Herstellung von Grundierungen.

Für eine Kratzfestausrüstung müssen sie mit wässrigen, thermisch härtbaren Beschichtungsstoffen auf der Basis von Epoxidgruppen enthaltenden Silanen (Sol-Gel-Systemen) ausgerüstet werden. Diese wässrigen Sol-Gel-Systeme, die über Hydrolyse- und Kondensationsreaktionen vernetzen, weisen aber die Nachteile auf, dass sie häufig durch die Zugabe von Salzen destabilisiert werden und dass ihre Stabilität stark vom pH-Wert abhängt. Außerdem können hydrophobe Zusatzstoffe wie Lichtschutzmittel - wenn überhaupt - nur schwer homogen eingemischt werden, was im Hinblick auf eine Verwendung auf dem Kraftfahrzeugsektor von größtem Nachteil ist. Häufig katalysieren die hydrophoben Lichtschutzmittel auch die Kondensationsreaktionen in den wässrigen Sol-Gel-Systemen, wodurch deren Lagerstabilität stark in Mitleidenschaft gezogen wird.

Aufgabe der vorliegenden Erfindung ist es, neue, Epoxid- und Silangruppen enthaltende Oligomere und Polymere bereitzustellen, die sich in einfacher Weise sehr gut reproduzierbar herstellen lassen und lagerstabil sind.

Die neuen, Epoxid- und Silangruppen enthaltenden Oligomeren und Polymeren sollen sich hervorragend für die Herstellung von wasserfreien, härtbaren, insbesondere thermisch oder thermisch und mit aktinischer Strahlung härtbaren, Gemischen eignen.

Die neuen, wasserfreien, härtbaren Gemische sollen hervorragend als Beschichtungsstoffe, Klebstoffe, Dichtungsmassen, Compounds auf der Basis technischer Kunststoffe und härtbare Massen allgemein, insbesondere aber als Beschichtungsstoffe, geeignet sein.

Die neuen wasserfreien, Beschichtungsstoffe, Klebstoffe, Dichtungsmassen, Compounds auf der Basis technischer Kunststoffe und härtbaren Massen allgemein sollen Beschichtungen, Klebschichten, Dichtungen, Formteile, freitragende Folien und Hartschäume, insbesondere Beschichtungen, mit hervorragenden anwendungstechnischen Eigenschaften liefern.

Insbesondere sollen die neuen Beschichtungen hart und flexibel, schlagfest, wasserbeständig, witterungsbeständig, chemikalienbeständig, frei von inneren Schrumpfungen und Spannungen und im Falle der Reparatur gut überlackierbar sein sowie eine sehr gute Haftung zu Substraten und eine sehr gute Zwischenschichthaftung aufweisen. Dabei sollen sie vor allem eine sehr gute Kratzfestigkeit haben.

Demgemäß wurden die neuen Epoxid- und Silangruppen enthaltenden Oligomeren und Polymeren gefunden, die herstellbar sind, indem man
(A) mindestens eine, mindestens zwei Epoxidgruppen (a1) enthaltende niedermolekulare, oligomere oder polymere Verbindung mit
(B) mindestens einem Silan, enthaltend
   (b1) mindestens einen mindestens zwelbindigen, organischen Rest, der für sich selbst gesehen nicht hydrolysterbar ist,
   (b2) mindestene eine cyclische Dicarbonsäureanhydridgruppe und
   (b3) mindestens eine Silangruppe, enthaltend mindestens eine hydrolyslerbare Gruppe (b31),
   wobei die cyclischen Dicarbonsäureanhydridgruppen (b2) über die Reste (b1) mit den Silangruppen (b3) verbunden sind,
   in einem apriotischen Medium oder in Masse unter Inertgas umsetzt, wobei des Äquivalentverhältnis von Epoxidgruppen (a1) zu Dicarbonsäureanhydridgruppen (b2) = 0,7 bis 100 ist.

Im Folgenden werden die neuen Epoxid- und Silangruppen enthaltenden Oligomeren und Polymeren der Kürze halber als »erfindungsgemäße Harze« bezeichnet.

Außerdem wurde das neue Verfahren zur Herstellung der erfindungsgemäßen harze gefunden, bei dem man
(A) mindestens eine, mindestens zwei Epoxidgruppen (a1) enthaltende niedermolekulare, oligomere oder polymere Verbindung mit
(B) mindestens einem Silan, enthaltend
   (b1) mindestens einen mindestens zweibindigen, organischen Rest, der für sich selbst gesehen nicht hydrolysierbar ist
   (b2) mindestens eine cyclische Dicarbonsäureanhydridgruppe und
   (b3) mindestens eine Silangruppe, enthaltend mindestens eine hydrolysierbare Gruppe (b31),
   wobei die cyclischen Dicarbonsäureanhydridgruppen (b2) über die Reste (b1) mit den Silangruppen (b2) verbunden sind,
in einem Äquivalentverhältnis von Epoxidgruppen (a1) zu Dicarbonsäureanhydridgruppen (b2) = 0,7 bis 100 in einem aprotischen Medium oder in Masse unter Inertgas umsetzt.

Im Folgenden wird das neue Verfahren zur Herstellung der erfindungsgemäßen Harze als »erfindungsgemäßes Verfahren« bezeichnet.

Nicht zuletzt wurde die neue Verwendung der erfindungsgemäßen Harze und der nach dem erfindungsgemäßen Verfahren hergestellten erfindungsgemäßen Harze für die Herstellung von wasserfreien härtbaren Gemischen gefunden, was im Folgenden als »erfindungsgemäße Verwendung« bezeichnet wird.

Weitere Erfindungsgegenstände gehen aus der Beschreibung hervor.

Im Hinblick auf den Stand der Technik war es überraschend und für den Fachmann nicht vorhersehbar, dass die Aufgabe, die der vorliegenden Erfindung zugrunde lag, mit Hilfe der erfindungsgemäßen Harze, des erfindungsgemäßen Verfahrens und der erfindungsgemäßen Verwendung gelöst werden konnte.

Insbesondere war es überraschend, dass sich die erfindungsgemäßen Harze und die nach dem erfindungsgemäßen Verfahren hergestellten erfindungsgemäßen Harzen hervorragend für die Herstellung von neuen wasserfreien härtbaren, insbesondere thermisch oder thermisch und mit aktinischer Strahlung härtbaren, Gemischen eigneten.

Die erfindungsgemäßen härtbaren Gemische waren hervorragend als neue Beschichtungsstoffe, Klebstoffe, Dichtungsmassen, Compounds auf der Basis technischer Kunststoffe und härtbare Massen allgemein, insbesondere aber als neue Beschichtungsstoffe, geeignet.

Die erfindungsgmäßen Beschichtungsstoffe, Klebstoffe, Dichtungsmassen, Compounds auf der Basis technischer Kunststoffe und härtbaren Massen allgemein lieferten neuen Beschichtungen, Klebschichten, Dichtungen, Formteile, freitragende Follen und Hartschäume, insbesondere neue Beschichtungen, mit hervorragenden anwendungstechnischen Eigenschaften.

Insbesondere waren die erfindungsgemäßen Beschichungen hart und flexibel, schlagfest, wasserbestätandig, witterungsbeständig, chemikallenbeständig frei von Inneren Schrumpfungen und Spannungen und im Falle der Reparatur gut überlacklerber und wiesen eine sehr gute Haftung zu Substraten und eine sehr gute Zwischenschichthaftung auf. Dabei hatten sie vor allem eine sehr gute Kratzfestigkeit.

Die erfindungsgemäßen Harze sind herstellbar, indem man
(A) mindestens eine, insbesondere eine, mindestens zwei Epoxidgruppen (a1) enthaltende niedermolekulare, oligomere oder polymere Verbindung mit
(B) mindestens einem, insbesondere einem, Silan, enthaltend
   (b1) mindestens einen mindestens zweibindigen, organischen Rest, der für sich selbst gesehen nicht hydrolysierbar ist,
   (b2) mindestens eine cyclische Dicarbonsäureanhydridgruppe und
   (b3) mindestens eine Silangruppe, enthaltend mindestens eine hydrolysierbere Gruppe (b31),
   wobei die cyclischen Dicarbonsäureanhydridgruppen (b2) über die Reste (b1) mit den Silangruppen (b3) verbunden sind,
in einem Äquivalentverhältnis von Epoxidgruppen (a1) zu Dicarbonsäureanhydridgruppen (b2) = 0,7 bis 100, vorzugsweise 0,9 bis 80 und insbesondere 1,1 bis 50 in einem apriotischen Medium oder in Masse unter Inertgas umsetzt.

Im Rahmen des erfindungsgemäßen Verfahrens erfolgt die Umsetzung in einem aprotischen Medium oder in Masse, vorzugsweise in einem aprotischen Medium, unter Inertgas, insbesondere unter Stickstoff.

Geeignete aprotischen, insbesondere aprotisch unpolare, Medien sind die üblichen und bekannten organischen Lösemittel, die keine aktiven Wasserstoffatome enthalten. Beispiele geeigneter aprotischer organischer Lösemittel gehen aus dem Lehrbuch von Dieter Stoye und Werner Freitag (Hrsg.),Paints, Coatings and Solvents, 2. Aufl., Wiley-VCH, Weinheim, New York, 1998,14. Solvents, Seiten 277 bis 373, hervor.

Vorzugsweise wird die Umsetzung solange durchgeführt, bis die cyclischen Dicarbonsäureanhydridgruppen (b2) insbesondere durch IR-Spektroskopie nicht mehr nachweisbar sind.

Bevorzugt wird die Umsetzung in der Gegenwart eines geeigneten Katalysators durchgeführt. Beispiele geeigneter Katalysatoren sind die üblichen und bekannten Katalysatoren für die Reaktionen von Epoxidgruppen mit Carbonsäureanhydriden. Gut geeignet sind alkoxyierte, insbesondere ethoxylierte, Fettamine, insbesondere Kokosamine. Besonders gut geeignet ist Polyoxyethylen(15)kokosamin, das unter der Marke Ethomeen® C/25 von der Firma Akzo Nobel vertrieben wird. Die Katalysatoren werden in den üblichen und bekannten, wirksamen Mengen, vorzugsweise in Mengen von 0,01 bis 5, bevorzugt 0,1 bis 4 und insbesondere 0,5 bis 3 Gew.-%, jeweils bezogen auf die Summe der Ausgangsprodukte und des Katalysators, eingesetzt.

Für das erfindungsgemäße Verfahren ist es wesentlich, dass nach der Umsetzung noch immer Epoxidgruppen (a1) in den erfindungsgemäßen Harzen vorhanden sind. Dies ist insbesondere dann zu beachten, wenn ein Äquivalentverhältnis (a1) : (b2) < 1 oder nur wenig größer als 1, beispielsweise 1,01, gewählt wird. Dann ist dafür Sorge zu tragen, dass in den Verbindungen (A) noch andere reaktive funktionelle Gruppen (a2), beispielsweise Hydroxylgruppen, vorhanden sind, die mit den cyclischen Dicarbonsäureanhydridgruppen (b2) reagieren können.

Die erfindungsgemäßen Harze sind Oligomere und Polymere.

Im Rahmen der vorliegenden Erfindung werden unter Oligomeren Verbindungen verstanden, die aus 3 bis 15 strukturellen Untereinheiten, die sich von Monomeren ableiten, aufgebaut sind. Der Übergang zwischen Oligomeren und Polymeren ist, was die Anzahl der strukturellen Untereinheiten betrifft, im Allgemeinen fließend. Unter Polymeren werden deshalb Verbindungen verstanden, die aus mehr als 10, insbesondere mehr als 15, strukturellen Untereinheiten aufgebaut sind.

Die erfindungsgemäß eingesetzten Verbindungen (A) sind niedermolekular oder im vorstehend genannten Sinne oligomer oder polymer. Insbesondere sind sie niedermolekular oder oligomer.

Die Verbindungen (A) enthalten mindestens zwei, insbesondere zwei, Epoxidgruppen (a1). Bevorzugt sind die beiden Epoxidgruppen (a1) endständig mit den Grundgerüsten der Verbindungen (A) verbunden, d. h., es handelt sich um terminale Epoxidgruppen (a1).

Vorzugsweise werden die Verbindungen (A) aus der Gruppe, bestehend aus Polyadditionsharzen und Polykondensationsharzen, ausgewählt. Im Rahmen der vorliegenden Erfindung werden damit auch Verbindungen (A) umfasst, die durch Polyaddition und durch Polykondensation erhältlich sind.

Die Verbindungen (A) sind üblich und bekannt und werden beispielsweise in der deutschen Patentanmeldung DE 100 18 395 A1, Seite 3, Absatz [0020], bis Seite 8, Absatz [0038], im Detail beschrieben.

Das erfindungsgemäß zu verwendende Silan (B) enthält mindestens einen, insbesondere einen, mindestens zweibindigen, insbesondere zweibindigen, organischen Rest (b1), der für sich selbst gesehen nicht hydrolysierbar ist.

Beispiele geeigneter Reste (b1) werden im Detail in der deutschen Patentanmeldung DE 102 21 009 A1, Seite 8, Absätze [0072] bis [0074], beschrieben, worin sie als zweibindige, organische verknüpfende Gruppen L bezeichnet werden. Insbesondere wird Trimethylen verwendet.

Außerdem enthält das Silan (B) mindestens eine, insbesondere eine, cyclische Dicarbonsäureanhydridgruppe (b2), die über einen der vorstehend beschriebenen Reste (b1) mit einer der nachstehend beschriebenen Silangruppen (b3) verbunden ist.

Die cyclischen Dicarbonsäureanhydridgruppen (b2) leiten sich von den üblichen und bekannten cyclischen Dicarbonsäureanhydriden ab. Beispiele geeigneter cyclischer Dicarbonsäureanhydride werden in der deutschen Patentanmeldung DE 38 39 215 A1, Seite 3, Zeile 5, bis Seite 4, Zeile 25, beschrieben. In Betracht kommen auch Phthalsäureanhydrid, Maleinsäureanhydrid und Bernsteinsäureanhydrid. Insbesondere leiten sich die cyclischen Dicarbonsäureanhydridgruppen (b2) von Bernsteinsäureanhydrid ab.

Nicht zuletzt enthält das Silan (B) mindestens eine, insbesondere eine Silangruppe (b3), die mindestens eine hydrolysierbare Gruppe (b31) und vorzugsweise mindestens zwei und insbesondere drei hydrolysierbare Gruppen (b31) enthält.

Beispiele geeigneter hydrolysierbarer Gruppen (b31) sind aus der deutschen Patentanmeldung DE 100 18 935 A1, Seite 9, Absatz [0065], bis Seite 10, Absatz [0066], bekannt. Insbesondere wird Ethoxy eingesetzt.

Demgemäß wird insbesondere 3-(Triethoxysilyl)propylbernsteinsäureanhydrid als Silan (B) verwendet. Es wird beispielsweise unter der Marke Geniosil® GF 20 von der Firma Wacker Chemie vertrieben.

Die erfindungsgemäßen Harze können vielfältig verwendet werden. Insbesondere kommen sie für die erfindungsgemäßen Verwendung in Betracht, d. h. für die Herstellung von neuen wasserfreien härtbaren, insbesondere thermisch oder thermisch und mit aktinischer Strahlung härtbaren, Gemischen, die nachstehend »erfindungsgemäße härtbare Gemische« genannt werden.

Im Rahmen der vorliegenden Erfindung werden die erfindungsgemäßen härtbaren Gemische dann als wasserfrei angesehen, wenn hierin mit den üblichen und bekannten Methoden kein Wasser nachgewiesen werden kann oder wenn hierin nur Wasserspuren enthalten sind, die unbeabsichtigt über die Bestandteile der erfindungsgemäßen härtbare Gemische eingeschleppt worden sind.

Im Rahmen der vorliegenden Erfindung wird unter aktinischer Strahlung elektromagnetische Strahlung wie nahes Infrarot (NIR), sichtbares Licht, UV-Strahlung, Röntgenstrahlung und Gammastrahlung, insbesondere UV-Strahlung, und Korpuskularstrahlung wie Elektronenstrahlung, Protonenstrahlung, Neutronenstrahlung, Betastrahlung und Alphastrahlung, insbesondere Elektronenstrahlung, verstanden.

Vorzugsweise sind die erfindungsgemäßen härtbaren Gemischen thermisch härtbar.

Bevorzugt enthalten die erfindungsgemäßen härtbaren Gemische mindestens eine, insbesondere eine, Chelatverbindung. Vorzugsweise wird die Chelatverbindung aus der Gruppe, bestehend aus Aluminium-, Titan- und Zirkoniumchelatverbindungen, ausgewählt. Beispiele geeigneter Chelatverbindungen werden im Detail in der deutschen Patentanmeldung DE 38 93 215 A1, Seite 14, Zeile 11, bis Seite 15, Zeile 57, beschrieben. Sie werden vorzugsweise in den dort angegebenen Mengen eingesetzt.

Die erfindungsgemäßen härtbaren Gemische können noch mindestens einen Zusatzstoff enthalten.

Vorzugsweise wird der Zusatzstoff aus der Gruppe, bestehend aus üblichen und bekannten farb- und/oder effektgebenden Pigmenten, organischen und anorganischen, transparenten oder opaken Füllstoffen, Nanopartikeln, sonstigen von den Epoxid- und Silangruppen enthaltenden Oligomeren und Polymeren verschiedenen, physikalisch, oxidativ, thermisch, mit aktinischer Strahlung und thermisch und mit aktinischer Strahlung härtbaren, oligomeren und polymeren Bindemitteln, Vernetzungsmitteln für die thermische Härtung, thermisch und/oder mit aktinischer Strahlung härtbaren Reaktiverdünnern, niedrig und hochsiedenden ("langen"), aprotischen, organischen Lösemitteln, UV-Absorbern, Lichtschutzmitteln, Radikalfängern, Entlüftungsmitteln, Slipadditiven, Polymerisationsinhibitoren, Photoinitiatoren, Initiatoren der thermischen Vernetzung, Entschäumern, Emulgatoren, Netz- und Dipergiermitteln, Haftvermittlern, Verlaufmitteln, filmbildenden Hilfsmitteln, Sag control agents (SCA), rheologiesteuernden Additiven (Verdicker), Flammschutzmitteln, Sikkativen, Trockungsmitteln, Hautverhinderungsmitteln, Korrosionsinhibitoren, Wachsen, Bioziden und Mattierungsmitteln; ausgewählt. Insbesondere werden Lackadditive als Zusatzstoffe eingesetzt (vgl. auch das Lehrbuch von Johan Bieleman, »Lackadditive« Wiley-VCH, Weinheim, New York, 1998, oder Römpp Online, Georg Thieme Verlag, Stuttgart, New York, 2002, »Additive«).

Die Auswahl des Zusatzstoffs richtet sich insbesondere nach dem für die erfindungsgemäßen härtbaren Gemische vorgesehenen Verwendungszwecke. Wesentlich ist dabei, dass der Zusatzstoff die Stabilität der erfindungsgemäßen härtbaren Gemische und/oder die Härtung sowie die Stabilität der erfindungsgemäßen gehärteten Gemische nicht beeinträchtigen darf.

Die Herstellung der erfindungsgemäßen härtbaren Gemische erfordert keine methodischen Besonderheiten, sondern erfolgt nach den üblichen und bekannten Methoden der Herstellung von härtbaren Gemischen mit Hilfe der üblichen und bekannten Mischverfahren und Vorrichtungen, wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer gegebenenfalls unter Ausschluß von aktinischer Strahlung.

Die erfindungsgemäßen härtbaren Gemische sind außerordentlich breit anwendbar. Insbesondere können sie als neue Beschichtungsstoffe, Klebstoffe, Dichtungsmassen, Compounds auf der Basis technischer Kunststoffe und härtbaren Massen allgemein, insbesondere aber als Beschichtungsstoffe, dienen.

Dabei dienen die erfindungsgemäßen Beschichtungsstoffe der Herstellung von neuen Beschichtungen und Lackierungen, die erfindungsgemäßen Klebstoffe der Herstellung von neuen Klebschichten, die erfindungsgemäßen Dichtungsmassen der Herstellung von neuen Dichtungen und die erfindungsgemäßen Compounds auf der Basis technischer Kunststoffe und die erfindungsgemäßen härtbaren Massen allgemein der Herstellung von neuen Formteilen, insbesondere optischen Formteilen, freitragenden Folien und Hartschäumen.

Die erfindungsgemäßen Beschichtungen und Lackierungen eignen sich insbesondere hervorragend für den Schutz von Oberflächen von Substraten jeglicher Art vor der Beschädigung durch mechanische Einwirkung, insbesondere dem Schutz vor Kratzern, und/oder zu ihrer Dekoration.

Als Substrate kommen all diejenigen in Betracht, die weder oberflächlich noch in der Tiefe durch die Härtung der applizierten erfindungsgemäßen Gemische unter Anwendung von Hitze oder Hitze und aktinischer Strahlung geschädigt werden. Die Substrate können bereits mit sonstigen Beschichtungen vorlackiert oder vorbeschichtet, mit sonstigen Klebschichten verklebt und/oder mit sonstigen Dichtungen abgedichtet sein.

Geeignete Subtrate bestehen beispielsweise aus Metallen, Kunststoffen, Holz, Keramik, Stein, Textil, Faserverbunden, Leder, Glas, Glasfasern, Glas- und Steinwolle, mineral- und harzgebundenen Baustoffen, wie Gips- und Zementplatten oder Dachziegel, sowie Verbunden dieser Materialien. Es kann sich aber auch um erfindungsgemäße Formteile, Hartschäume und freitragende Folien handeln

Bei den Substraten handelt es sich vor allem um mit Motoren oder mit Muskelkraft angetriebene Fortbewegungsmittel und Schwebekörper aller Art zur Luft, zu Lande und zu Wasser sowie Teile hiervon, insbesondere Fluggeräte (beispielsweise Flugzeuge, Hubschrauber, Ballone oder Zeppeline), Schwimmgeräte (beispielsweise Schiffe, künstliche Inseln oder Bojen), Schienenfahrzeuge (beispielsweise Lokomotiven, Wagons, Triebwagen und Draisinen), Straßenfahrzeuge (beispielsweise Fahrräder, Nutzfahrzeuge oder PKW), Bauwerke im Innen- und Außenbereich und Teile hiervon, Möbel, Fenster und Türen, industrielle Kleinteile, Coils, Container, Emballagen, weiße Ware, Folien, optische Bauteile, elektrotechnische Bauteile, mechanische Bauteile sowie Glashohlkörper. Weitere Beispiele für Verwendungszwecke und Substrate sind aus der deutschen Patentanmeldung DE 198 16 136 A1, Spalte 7, Zeile 54, bis Spalte 8, Zeile 58, oder der internationalen Patentanmeldung WO 99/52964, Seite 12, Zeile 10 bis Seite 14, Zeile 4, bekannt.

Aufgrund ihrer besonders vorteilhaften Eigenschaften eignen sich die erfindungsgemäßen härtbaren Gemische insbesondere als erfindungsgemäße Beschichtungsstoffe für die Herstellung von neuen hochkratzfesten Beschichtungen in exponierten Bereichen der Substrate, insbesondere PKW, die häufig mechanischer Belastung ausgesetzt sind.

Überraschenderweise können die erfindungsgemäßen Beschichtungsstoffe als neue Zwei- oder Mehrkomponentensysteme bereitgestellt werden. Die erfindungsgemäßen Zwei- und Mehrkomponentensysteme haben eine besonders lange Topfzeit oder Verarbeitungszeit.

Besonders bevorzugt werden die erfindungsgemäßen Beschichtungsstoffe für die Herstellung erfindungsgemäßer hochkratzfester Klarlackierungen von farb- und/oder effektgebenden Mehrschichtlackierungen im Rahmen der Automobilserienlackierung (OEM) verwendet. Vorzugsweise werden diese besonders hochwertigen erfindungsgemäßen Mehrschichtlackierungen nach so genannten Nass-in-nass-Verfahren hergestellt, wie sie beispielsweise aus der deutschen Patentanmeldung DE 199 30 665 A1, Seite 15, Zeile 15, bis Seite 16, Zeile 24, bekannt sind.

Im Allgemeinen werden dabei die Elektrotauchlackschicht, Füllerlackschicht, Basislackschicht und Klarlackschicht in einer Nassschichtdicke appliziert, dass nach ihrer Aushärtung Schichten mit der für ihre Funktionen notwendigen und vorteilhaften Schichtdicken resultieren. Im Falle der Elektrotauchlackierung liegt diese Schichtdicke bei 10 bis 70, vorzugsweise 10 bis 60, besonders bevorzugt 15 bis 50 und insbesondere 15 bis 45 µm; im Falle der Füllerlackierung liegt sie bei 10 bis 150, vorzugsweise 10 bis 120, besonders bevorzugt 10 bis 100 und insbesondere 10 bis 90 µm; im Falle der Basislackierung liegt sie bei 5 bis 50, vorzugsweise 5 bis 40, besonders bevorzugt 5 bis 30 und insbesondere 10 bis 25 µm; und im Falle der erfindungsgemäßen Klarlackierungen liegt sie bei mindestens 30 bis 120, vorzugsweise mindestens 40 bis 100, besonders bevorzugt 50 bis 100 und insbesondere 60 bis 100 µm. Es kann aber auch der aus der europäischen Patentanmeldung EP 0 817 614 A1 bekannte Mehrschichtaufbau aus einer Elektrotauchlackierung, einer ersten Basislackierung, einer zweiten Basislackierung und einer erfindungsgemäßen Klarlackierung angewandt werden, worin die Gesamtschichtdicke der ersten und zweiten Basislackierung bei 15 bis 40 µm liegt und die Schichtdicke der ersten Basislackierung 20 bis 50% der besagten Gesamtschichtdicke beträgt.

Die Elektrotauchlackschicht, Füllerlackschicht, Basislackschicht und erfindungsgemäße Klarlackschicht können dabei thermisch oder thermisch und mit aktinischer Strahlung (Dual Cure) gehärtet werden.

Für die Herstellung der erfindungsgemäßen Beschichtungen und Lackierungen werden die erfindungsgemäßen Beschichtungsstoffe mit Hilfe der für den jeweiligen Verwendungszweck üblichen und bekannten geeigneten Verfahren appliziert, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen. Die Applikationen kann bei Temperaturen von max. 70 bis 80°C durchgeführt werden, so dass geeignete Applikationsviskositäten erreicht werden, ohne dass bei der kurzzeitig einwirkenden thermischen Belastung Veränderungen, in den oder Schädigungen der erfindungsgemäßen Beschichtungsstoffe und ihres gegebenenfalls wieder aufzubereitenden Overspray eintreten. So kann das Heißspritzen so ausgestaltet sein, dass die erfindungsgemäßen Beschichtungsstoffe nur sehr kurz in der oder kurz vor der Spritzdüse erhitzt werden.

Die für die Applikation verwendete Spritzkabine kann beispielsweise mit einem gegebenenfalls temperierbaren Umlauf betrieben werden, der mit einem geeigneten Absorptionsmedium für den Overspray, z. B. der erfindungsgemäßen Beschichtungsstoffe selbst, betrieben wird.

Von ganz besonderem Vorteil ist, dass die erfindungsgemäße Beschichtung durch Applikation eines erfindungsgemäßen Beschichtungsstoffs in einem Schritt appliziert werden kann und nicht aus mehreren diskreten Schichten aufgebaut werden muss.

Für die Herstellung der erfindungsgemäßen Formteile werden die erfindungsgemäßen härtbaren Gemische in geeignete Hohlformen gegossen und darin ausgehärtet, wonach sie von den Hohlformen getrennt werden.

Die erfindungsgemäßen Compounds auf der Basis technischer Kunststoffe werden vorzugsweise extrudiert und anschließend in geeigneten Hohlformen spritzgegossen.

Für die Herstellung der erfindungsgemäßen Folien werden die üblichen und bekannten Methoden wie Gießen oder Folienblasen angewandt.

Für die Herstellung der erfindungsgemäßen Hartschäume werden die auf dem Gebiet der Schaumkunststoffe üblichen und bekannten Verfahren angewandt (vgl. Römpp Online, Georg Thieme Verlag, Stuttgart, New York, 2002, »Schaumkunststoffe«).

Die thermische Härtung der erfindungsgemäßen Beschichtungsstoffe, Klebstoffe, Dichtungsmassen und härtbaren Massen allgemein kann nach einer gewissen Ruhezeit erfolgen. Sie kann eine Dauer von 30 Sekunden bis 2 Stunden, vorzugsweise 1 Minute bis 1 Stunde und insbesondere 1 bis 45 Minuten haben. Die Ruhezeit dient beispielsweise zum Verlauf und zur Entgasung der applizierten erfindungsgemäßen härtbaren Massen oder zum Verdunsten von flüchtigen Bestandteilen. Die Ruhezeit kann durch die Anwendung erhöhter Temperaturen unterstützt und/oder verkürzt werden, sofern hierbei keine Schädigungen oder Veränderungen der erfindungsgemäßen Beschichtungsstoffe, Klebstoffe Dichtungsmassen und härtbaren Massen allgemein eintreten, wie etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung). Geeignete Verfahren dieser Art werden beispielsweise von Rodger Talbert in Industrial Paint & Powder, 04/01, Seiten 30 bis 33, »Curing in Seconds with NIR«, oder in Galvanotechnik, Band 90 (11), Seiten 3098 bis 3100, »Lackiertechnik, NIR-Trocknung im Sekundentakt von Flüssig- und Pulverlacken«, beschrieben.

Vorteilhafterweise erfolgt die thermische Härtung bei einer Temperatur von 50 bis 200, besonders bevorzugt 60 bis 180 und insbesondere 80 bis 160°C während einer Zeit von 1 Minute bis zu 2 Stunden, besonders bevorzugt 2 Minuten bis zu 1 Stunde und insbesondere 3 bis 30 Minuten.

Die Härtung mit aktinischer Strahlung wird vorzugsweise mit UV-Strahlung und/oder Elektronenstrahlung durchgeführt. Vorzugsweise wird hierbei eine Dosis von 1.000 bis 3.000, bevorzugt 1.100 bis 2.900, besonders bevorzugt 1.200 bis 2.800, ganz besonders bevorzugt 1.300 bis 2.700 und insbesondere 1.400 bis 2.600 mJ/cm² angewandt. Vorzugsweise liegt die Strahlenintensität bei 1x10° bis 3x10⁵, bevorzugt 2x10° bis 2x10⁵, besonders bevorzugt 3x10° bis 1,5x10⁵ und insbesondere 5x10° bis 1,2x10⁵ Wm⁻².

Gegebenenfalls kann die Härtung mit aktinischer Strahlung von anderen Strahlenquellen ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Lackschichten gewährleistet werden. Auch im Falle der Härtung mit UV-Strahlung kann, um die Bildung von Ozon zu vermeiden, unter Inertgas oder einer sauerstoffabgereicherten Atmosphäre gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Blitzlampen der Firma VISIT, Quecksilberhoch- oder - niederdruckdampflampen, welche gegebenenfalls mit Blei dotiert sind, um ein Strahlenfenster bis zu 405 nm zu öffnen, oder Elektronenstrahlquellen. Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, beschrieben. Weitere Beispiele geeigneter Verfahren und Vorrichtungen zur Härtung mit aktinischer Strahlung werden in der deutschen Patentanmeldung DE 198 18 735 A1, Spalte 10, Zeilen 31 bis 61, von R. Stephen Davidson, in »Exploring the Science, Technology and Applications of U.V. and E.B. Curing«, Sita Technology Ltd., London, 1999, oder von Dipl.-Ing. Peter Klamann, in »eltosch System-Kompetenz, UV-Technik, Leitfaden für Anwender«, Oktober 1998, beschrieben.

Bei kompliziert geformten Werkstücken, wie sie für Automobilkarosserien vorgesehen sind, können die nicht direkter Strahlung zugänglichen Bereiche (Schattenbereiche), wie Hohlräume, Falzen und andere konstruktionsbedingte Hinterschneidungen, mit Punkt-, Kleinflächen- oder Rundumstrahlern, verbunden mit einer automatischen Bewegungseinrichtung für das Bestrahlen von Hohlräumen oder Kanten, (partiell) ausgehärtet werden.

Hierbei kann die Aushärtung stufenweise erfolgen, d. h. durch mehrfache Belichtung oder Bestrahlung mit aktinischer Strahlung. Dies kann auch alternierend erfolgen, d. h., dass abwechselnd mit UV-Strahlung und Elektronenstrahlung gehärtet wird.

Werden die thermische Härtung und Härtung mit aktinischer Strahlung zusammen angewandt, können diese Methoden gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden.

Die resultierenden erfindungsgemäßen Beschichtungen, Lackierungen, Klebschichten, Dichtungen, Formteile, freitragenden Folien und Hartschäume haben hervorragende anwendungstechnische Eigenschaften. Vor allem sind ihre hohe Transparenz und Klarheit sowie ihre besonders hohe Kratzfestigkeit hervorzuheben.

Die erfindungsgemäßen Beschichtungen und Lackierungen weisen ein hervorragendes Eigenschaftsprofil auf, das hinsichtlich der Mechanik, Optik, Korrosionsbeständigkeit und Haftung sehr gut ausgewogen ist. So weisen die erfindungsgemäßen Mehrschichtlackierungen die vom Markt geforderte hohe optische Qualität und Zwischenschichthaftung auf und werfen keine Probleme wie mangelnde Schwitzwasserbeständigkeit, Rissbildung (mudcracking) oder Verlaufsstörungen oder Oberflächenstrukturen in den erfindungsgemäßen Klarlackierungen auf. Insbesondere weisen die erfindungsgemäßen Mehrschichtlackierungen einen hervorragenden Metallic-Effekt, einen hervorragenden D.O.I. (distinctiveness of the reflected image) und eine hervorragende Oberflächenglätte auf.

Demzufolge weisen Substrate, die beispielsweise mit mindestens einer erfindungsgemäßen Beschichtung, Lackierung oder freitragenden Folie beschichtet, einer erfindungsgemäßen Klebschicht verklebt und/oder einer erfindungsgemäßen Dichtung abgedichtet sind, bei einem besonders vorteilhaften anwendungstechnischen Eigenschaftsprofil eine besonders lange Gebrauchsdauer auf, was sie wirtschaftlich, ästhetisch und technisch besonders wertvoll macht.

### Beispiele

### Beispiel 1

### Die Herstellung eines Epoxid- und Silangruppen enthaltenden Harzes

In einem geeigneten Reaktionsgefäss, ausgerüstet mit Rührer, Rückflußkühler, Thermometer, Außenheizung und Stickstoffeinleitungsrohr, wurden
- 13,5 Gewichtsteile Solventnaphtha®,
- 39,88 Gewichtsteile Epoxidharz (Vantico® 6334 der Firma Vantico; Epoxyäquivalentgewicht: 199,38 g/Mol),
- 12,18 Gewichtsteile 3-(Triethoxysilyl)propylbernsteinsäureanhydrid (Geniosil® GF 20 der Firma Wacker Chemie) und
- 0,52 Gewichtsteile Kokosalkylaminethoxylat (Polyoxyethylen(15)kokosamin; Ethomeen® C/25 der Firma Akzo Nobel)
vorgelegt und mit Stickstoff überschleiert. Anschließend wurde das Reaktionsgemisch unter Rühren auf 100°C erhitzt. Der Fortschritt der Reaktion wurde mittels Infrarotspektroskopie verfolgt: Nach etwa 30 Minuten waren keine Anhydridgruppen mehr spektroskopisch nachweisbar.

Das resultierende Epoxid- und Silangruppen enthaltende Harz war sowohl in Lösung als auch isoliert in Substanz bei Raumtemperatur lagerstabil und hervorragend für die Herstellung von Beschichtungsstoffen in der Form von Einkomponenten- und Mehrkomponentensystemen, vorzugsweise Mehrkomponentensystemen und insbesondere Zweikomponentensystemen, geeignet.

### Beispiel 2

### Die Herstellung eines Zweikomponentensystems und eines Beschichtungsstoff hieraus

Als Komponente I des Zweikomponentensystems wurde die Lösung des Epoxid- und Silangruppen enthaltenden Harzes in Solventnaphtha® gemäß Beispiel 1 verwendet.

Als Komponente II des Zweikomponentensystems wurde ein Katalysator auf der Basis einer Aluminiumchelatverbindung aus 20,43 Gewichtsteilen Aluminium-sec.-butylat und 13,01 Gewichtsteilen Ethylacetoacetat durch Vermischen der Reaktionspartner unter externer Kühlung und Rühren des resultierenden Reaktionsgemischs während einer Stunde bei Raumtemperatur hergestellt.

Das resultierende Zweikomponentensystem war bei Raumtemperatur praktisch unbegrenzt haltbar und hervorragend für die Herstellung von Beschichtungsstoffen geeignet.

Für die Herstellung eines Beschichtungsstoffs wurden 90 Gewichtsteile der Komponente I mit 10 Gewichtsteilen der Komponente II versetzt, wonach die resultierende Mischung homogenisiert wurde.

Der resultierende Beschichtungsstoff wies eine praxisgerechte, vorteilhaft lange Topfzeit und sehr gute Applikationseigenschaften auf. Er war hervorragend als Klarlack für die Herstellung von farb- und/oder effektgebenden Mehrschichtlackierungen für PKW im OEM-Bereich, für die Kratzfest-Nachrüstung von exponierten Stellen an Kraftfahrzeugkarosserien sowie als Reparatur-Klarlack für die Autoreparaturlackierung geeignet.

### Beispiel 3

### Die Herstellung einer Klarlackierung

Für die Herstellung der Klarlackierung wurde der Beschichtungsstoff gemäß Beispiel 2 verwendet. Dabei wurde der Beschichtungsstoff in einer Nassschichtdicke auf Glastafeln aufgerakelt, dass nach der Härtung bei 140°C während 22 Minuten eine Trockenschichtdicke von 25 µm resultierte.

Die resultierenden Klarlackschichten waren transparent und klar, hochglänzend und brillant. Ihre Haftfestigkeit war hervorragend. Sie waren frei von Spannungsrissen und anderen Oberflächendefekten.

Sie waren außerdem kratzfest, was anhand des Stahlwolle-Kratztests (Note 3) untermauert wurde.

Zur Durchführung des Stahlwolle-Kratztests wurde ein Hammer nach DIN 1041 (Gewicht ohne Stiel: 800 g; Stiellänge: 35 cm) verwendet. Die Prüftafeln wurden vor dem Test während 24 h bei Raumtemperatur gelagert.

Die flache Hammerseite wurde mit einer Lage Stahlwolle bespannt, die mit Tesakrepp an den hochgeschlagenen Seiten befestigt wurde. Der Hammer wurde im rechten Winkel auf die Klarlackierungen aufgesetzt. Das Gewichtsstück des Hammers wurde ohne zu verkannten und ohne zusätzliche Körperkraft in einer Spur über die Oberfläche der Klarlackierungen geführt.

Bei jeder Prüfung wurden 100 Doppelhübe in einer Zeit von etwa 100 s ausgeführt. Nach jeder dieser Einzelprüfungen wurde die Stahlwolle ausgetauscht.

Nach der Belastung wurden die Prüfflächen mit einem weichen Tuch von den Stahlwolleresten gereinigt. Die Prüfflächen wurden visuell unter Kunstlicht ausgewertet und wie folgt benotet:

| Note | Schädigungsbild |
|---|---|
| 1 | nicht vorhanden |
| 2 | gering |
| 3 | mäßig |
| 4 | mäßig bis mittel |
| 5 | stark |
| 6 | sehr stark |

Die Auswertung erfolgte unmittelbar nach Versuchsende.

Die Klarlackierungen waren auch chemikalienbeständig, was mit Hilfe des BART bestimmt wurde

Der BART (BASF ACID RESISTANCE TEST) diente der Ermittlung der Beständigkeit von Lackoberflächen gegen Säuren, Laugen und Wassertropfen. Dabei wurden die Klarlackierungen auf einem Gradientenofen nach der Einbrennung weiteren Temperaturbelastungen ausgesetzt (30 min 40°C, 50°C, 60°C und 70°C). Zuvor wurden die Testsubstanzen (Schwefelsäure 1%-ig, 10%-ig, 36%-ig; schweflige Säure 5%-ig, Salzsäure 10%-ig, Natronlauge 5%-ig, VE (= vollentsalztes) Wasser - 1, 2, 3 bzw. 4 Tropfen) definiert mit einer Dosierpipette aufgebracht. Im Anschluss an die Einwirkung der Substanzen wurden diese unter fließendem Wasser entfernt und die Beschädigungen nach 24 h entsprechend einer vorgegebenen Skala visuell beurteilt:

| Benotung | Aussehen |
|---|---|
| 0 | kein Defekt |
| 1 | leichte Markierung |
| 2 | Markierung/Vermattung/keine Erweichung |
| 3 | Markierung/Vermattung/Farbtonveränderung/Erweichung |
| 4 | Risse/beginnende Durchätzung |
| 5 | Klarlack entfernt |

Es wurde jede einzelne Markierung (Spot) ausgewertet und das Ergebnis in Form einer Note für jede Testsubstanz festgehalten:

| Testsubstanz | Note |
|---|---|
| Schwefelsäure 10%ig | 3 |
| Schwefelsäure 36%ig | 3 |
| Salzsäure 10%ig | 1 |
| Schweflige Säure 6%ig | 3 |
| Natronlauge 5 %ig | 0 |
| VE-Wasser | 0 |

Die Universalhärte in N/mm² bei 25,6, 10 und 5 mN, das Kriechverhalten in % bei 25,6 mN und die relative elastische Tiefenrückfederung in % wurden nach DIN 55676 mit Hilfe eines Fischerscope ® H100C der Firma Helmut Fischer GmbH gemessen, wobei die Kraft an die Schichtdicke und die mechanischen Eigenschaften der Klarlackierungen angepasst wurde, damit die Eindringtiefe nicht mehr als 10% der Schichtdicke betrug. Es wurden die folgenden Ergebnisse erhalten:

| | |
|---|---|
| Universalhärte: | 138, |
| Tiefenrückfederung: | 42,67% und |
| Kriechverhalten: | 9,18%. |

Die Ergebnisse untermauern, dass die Klarlackierungen eine hohe Kratzfestigkeit, verbunden mit einer vergleichsweise hohen Härte und Flexibilität, aufwiesen.

## Patentansprüche

1. Epoxid- und Silangruppen enthaltende Oligomere und Polymere, herstellbar, indem man
(A) mindestens eine, mindestens zwei Epoxidgruppen (a1) enthaltende niedermolekulare, oligomere oder polymere Verbindung mit
(B) mindestens einem Silan, enthaltend
(b1) mindestens einen mindestens zwelbindigen, organischen Rest, der für sich selbst gesehen nicht hydrolysierbar Ist,
(b2) mindestens eine cyclische Dicarbonsäureanhydridgruppe und
(b3) mindestens eine Silangruppe, enthaltende mindestens eine hydrolysierbare Gruppe (b31),
wobei die cyclischen Dicarbonsäureanhydridgruppen (b2) über die Reste (b1) mit den Silangruppen (b3) verbunden sind,
in einem apriotischen Medium oder in Masse unter Inertgas umsetzt, wobei das Äquivalentverhältnis von Epoxidgruppen (a1) zu Dicarbonsäureanhydrigruppen (b2) = 0,7 bis 100 ist.

2. Oligomere und Polymere nach Anspruch 1, **dadurch gekennzeichnet, dass** die oligomeren und polymeren Verbindungen (A) aus der Gruppe, bestehend aus Polyadditionsharzen und Polykondensationsharzen, ausgewählt sind.

3. Oligomere und Polymere nach Anspruch 1 oder 2, **dadurch gekennzeichnet, dass** die Verbindungen (A) ein Epoxidäquivalentgewicht von 70 bis 1.000 g/Mol hat.

4. Oligomere und Polymere nach einem der Anspruche 1 bis 3, **dadurch gekennzeichnet, dass** das Silan (B) einen Rest (b1) enthält.

5. Oligomere und Polymere nach einem der Ansprüche 1 bis 4, **dadurch gekennzeichnet, dass** das Silan (B) einen zweibindigen Rest (b1) enthält.

6. Oligomere und Polymere nach einem der Ansprüche 1 bis 5, **dadurch gekennzeichnet, dass** das Silan (B) eine cyclische Dicarbonsäureanhydridgruppe (b2) enthält.

7. Oligomere und Polymere nach einem der Ansprüche 1 bis 6, **dadurch gekennzeichnet, dass** die cyclische Dicarbonsäureanhydridgruppe (b2) eine Bemsteinsäureanhydridgruppe ist.

8. Oligomere und Polymere nach einem der Ansprüche 1 bis 7, **dadurch gekennzeichnet, dass** das Silan (B) eine Silangruppe (b3) enthält.

9. Oligomere und Polymere nach einem der Ansprüche 1 bis 8, **dadurch gekennzeichnet, dass** die Silangruppe (b3) mindestens zwei, insbesondere drel, hydrolysierbare Gruppen (b31) enthält.

10. Oligomere und Polymere nach einem der Ansprüche 1 bis 9, **dadurch gekennzeichnet, dass** das Äquivalentverhältnis (a1) : (b2) = 1,1 bis 50 ist.

11. Verfahren zur Herstellung der Epoxid- und Silangruppen enthaltenden Oligomeren und Polymeren gemäss einem der Ansprüche 1 bis 10, **dadurch gekennzeichnet, dass** man
(A) mindestens eine, mindestens zwei Epoxidgruppen (a1) enthaltende niedermolekulare, ollgomere oder polymers Verbindung mit.
(B) mindestens einem Silan, enthaltend
(b1) mindestens einen mindestens zweibindigen, organischen Rest, der für sich selbst gesehen nicht hydrolyslerbar ist,
(b2) mindestens eine cyclische Dicarbonsäureanhydridgruppe und
(b3) mindestens eine Silangruppe, enthaltend mindestens eine hydrolysierbare Gruppe (b31),
wobei die cyclischen Dicarbonsäureanhydridgruppen (b2) über die Reste (b1) mit den Silangruppen (b3) verbunden sind,
In einem Äquivalentverhältnis von Epoxidgruppen (a1) zu Dicarbonsäureanhydridgruppen (b2) = 0,7 bis 100 in einem aprotischen Medium oder in Masse unter inertgas umsetzt.

12. Verfahren nach Anspruch 11, **dadurch gekennzeichnet, dass** man die Umsetzung in der Gegenwart eines Katalysators durchführt.

13. Verwendung der Epoxid- und Silangruppen enthaltenden Ollgomeren und Polymeren gemäss einem der Ansprüche 1 bis 10 sowie der nach dem Verfahren gemäss Anspruch 11 oder 12 hergestellten Epoxid- und Silangruppen enthaltenden Oligomeren und Polymeren für die Herstellung von wasserfreien härtbaren Gemischen.

14. Verwendung nach Anspruch 13, **dadurch gekennzeichnet, dass** die wasserfreien härtbaren Gemische mindestens eine Chelatverbindung enthalten.

15. Verwendung nach Anspruch 14, **dadurch gekennzeichnet, dass** die Chelatverbindung aus der Gruppe, bestehend aus Aluminium-, Titan- und Zirkoniumchelatverbindungen ausgewählt werden.

16. Verwendung nach einem der Ansprüche 13 bis 15, **dadurch gekennzeichnet, dass** die wasserfreien härtbaren Gemische thermisch oder thermisch und mit aktinischer Strahlung härtbar sind.

17. Verwendung nach einem der Ansprüche 13 bis 16, **dadurch gekennzeichnet, dass** die wasserfreien härtbaren Gemische Zusatzstoffe, ausgewählt aus der Gruppe, bestehend aus farb- und/oder effektgebenden Pigmenten, organischen und anorganischen, transparenten oder opaken Füllstoffen, Nanopartikeln, sonstigen von den Epoxid- und Silangruppen enthaltenden Oligomeren und Polymeren verschiedenen, physikalisch, oxidativ, thermisch, mit aktinischer Strahlung und thermisch und mit aktinischer Strahlung härtbaren, oligomeren und polymeren Bindemitteln, Vernetzungsmitteln für die thermische Härtung, thermisch und/oder mit aktinischer Strahlung härtbaren Reaktiverdünnern, niedrig und hochsiedenden ("langen"), aprotischen, organischen Lösemitteln, UV-Absorbern, Lichtschutzmitteln, Radikalfängern, Entlüftungsmitteln, Slipadditiven, Polymerisationsinhibitoren, Photoinitiatoren, Initiatoren der thermischen Vernetzung, Entschäumern, Emulgatoren, Netz- und Dipergiermitteln, Haftvermittlern, Verlaufmitteln, filmbildenden Hilfsmitteln, Sag control agents (SCA), rheologlesteuernden Additiven (Verdicker), Flammschutzmitteln, Sikkativen, Trockungsmitteln, Hautverhinderungsmitteln, Korrosionsinhibitoren, Wachsen, Bloziden und Mattlerungsmitteln, ausgewählt sind.

18. Verwendung nach einem der Ansprüche 13 bis 17, **dadurch gekennzeichnet, dass** die wasserfreien härtbaren Gemische als Beschichtungsstoffe, Klebstoffe, Dichtungsmassen, Compounds auf der Basis technischer Kunststoffe und härtbare Massen allgemein, insbesondere aber als Beschichtungestoffe, eingesetzt werden.

19. Verwendung nach Anspruch 18, **dadurch gekennzeichnet dass** die Beschichtungsstoffe der Herstellung von Beschichtungen und Lackierungen, die Klebstoffe der Herstellung von Klebschichten, die Dichtungsmassen der Herstellung von Dichtungen und die Compounds auf der Basis technischer Kunststoffe und die härtbaren Massen allgemein der Herstellung von Formtellen, insbesondere optischen Formteilen, freitragenden Folien und Hartschäumen dienen.

## Claims

1. Oligomers and polymers containing epoxide groups and silane groups and preparable by reacting, in an aprotic medium or in bulk under inert gas,
(A) at least one low molecular mass, oligomeric or polymeric compound containing at least two epoxide groups (a1) with
(B) at least one silane containing
(b1) at least one at least divalent organic radical which per se is not hydrolysable,
(b2) at least one cyclic dicarboxylic anhydride group and
(b3) at least one silane group containing at least one hydrolysable group (b31),
the cyclic dicarboxylic anhydride groups (b2) being attached to the silane groups (b3) via the radicals (b1),
the equivalent ratio of epoxide groups (a1) to dicarboxylic anhydride groups (b2) being 0.7 to 100.

2. Oligomers and polymers according to Claim 1, **characterized in that** the oligomeric and polymeric compounds (A) are selected from the group consisting of polyaddition resins and polycondensation resins.

3. Oligomers and polymers according to Claim 1 or 2, **characterized in that** the compound (A) has an epoxide equivalent weight of 70 to 1000 g/mol.

4. Oligomers and polymers according to any one of Claims 1 to 3, **characterized in that** the silane (B) includes a radical (b1).

5. Oligomers and polymers according to any one of Claims 1 to 4, **characterized in that** the silane (B) includes a divalent radical (b1).

6. Oligomers and polymers according to any one of Claims 1 to 5, **characterized in that** the silane (B) includes a cyclic dicarboxylic anhydride group (b2).

7. Oligomers and polymers according to any one of Claims 1 to 6, **characterized in that** the cyclic dicarboxylic anhydride group (b2) is a succinic anhydride group.

8. Oligomers and polymers according to any one of Claims 1 to 7, **characterized in that** the silane (B) includes a silane group (b3).

9. Oligomers and polymers according to any one of Claims 1 to 8, **characterized in that** the silane group (b3) includes at least two, in particular three, hydrolysable groups (b31).

10. Oligomers and polymers according to any one of Claims 1 to 9, **characterized in that** the equivalent ratio (a1):(b2) is 1.1 to 50.

11. Process for preparing the oligomers and polymers containing epoxide groups and silane groups, according to any one of Claims 1 to 10, **characterized by** the reaction of
(A) at least one low molecular mass, oligomeric or polymeric compound containing at least two epoxide groups (a1) with
(B) at least one silane containing
(b1) at least one at least divalent organic radical which per se is not hydrolysable.
(b2) at least one cyclic dicarboxylic anhydride group and
(b3) at least one silane group containing at least one hydrolysable group (b31),
the cyclic dicarboxylic anhydride groups (b2) being attached to the silane groups (b3) via the radicals (b1),
in an equivalent ratio of epoxide groups (a1) to dicarboxylic anhydride groups (b2) of 0.7 to 100 in an aprotic medium or in bulk under inert gas.

12. Process according to Claim 11, **characterized in that** the reaction is carried out in the presence of a catalyst.

13. Use of the oligomers and polymers containing epoxide groups and silane groups, according to any one of Claims 1 to 10, or of the oligomers and polymers containing epoxide groups and silane groups and prepared by the process according to Claim 11 or 12, for preparing anhydrous curable compositions.

14. Use according to Claim 13, **characterized in that** the anhydrous curable compositions comprise at least one chelate compound.

15. Use according to Claim 14, **characterized in that** the chelate compound is selected from the group consisting of aluminium chelate, titanium chelate and zirconium chelate compounds.

16. Use according to any one of Claims 13 to 15, **characterized in that** the anhydrous curable compositions are curable thermally or both thermally and with actinic radiation.

17. Use according to any one of Claims 13 to 16, **characterized in that** the anhydrous curable compositions comprise additives selected from the group consisting of colour and/or effect pigments, organic and inorganic, transparent or opaque fillers, nanoparticles, other oligomeric and polymeric binders, curable physically, oxidatively, thermally, with actinic radiation, or both thermally and with actinic radiation and different from the oligomers and polymers containing epoxide groups and silane groups, crosslinkers for thermal curing, reactive diluents curable thermally and/or with actinic radiation, low and high-boiling ("long"), aprotic, organic solvents, UV absorbers, light stabilizers, free-radical scavengers, deaerating agents, slip additives, polymerization inhibitors, photoinitiators, thermal crosslinking initiators, defoamers, emulsifiers, wetting agents, dispersants, adhesion promoters, flow control agents, film-forming auxiliaries, sag control agents (SCAs), rheology control additives (thickeners), flame retardants, siccatives, dryers, antiskinning agents, corrosion inhibitors, waxes, biocides and flatting agents.

18. Use according to any one of Claims 13 to 17, **characterized in that** the anhydrous curable compositions are used as coating materials, adhesives, sealants, compounds based on engineering plastics, and curable materials in general, but especially as coating materials.

19. Use according to Claim 18, **characterized in that** the coating materials serve to produce coatings and paint systems, the adhesives serve to produce adhesive layers, the sealants serve to produce seals, and the compounds based on engineering plastics and the curable materials in general serve to produce mouldings, especially optical mouldings, self-supporting sheets and rigid foams.

## Revendications

1. Oligomères et polymères contenant des groupes époxyde et silane, pouvant être préparés en ce qu'on transforme
(A) au moins un composé oligomère ou polymère de bas poids moléculaire, contenant au moins deux groupes époxyde (a1)
(B) au moins un silane, contenant
(b1) au moins un radical organique au moins divalent, qui n'est pas hydrolysable en soi,
(b2) au moins un groupe anhydride d'acide dicarboxylique cyclique et
(b3) au moins un groupe silane, contenant au moins un groupe hydrolysable (b31),
où les groupes anhydride d'acide dicarboxylique cyclique (b2) sont liés via les radicaux (b1) avec les groupes silane (b3),
dans un milieu aprotique ou en masse sous gaz inerte, le rapport des équivalents de groupes époxyde (a1) aux groupes anhydride d'acide dicarboxylique (b2) = 0,7 à 100.

2. Oligomères et polymères selon la revendication 1, **caractérisés en ce que** les composés oligomères et polymères (A) sont choisis dans le groupe constitué par les résines de polyaddition et les résines de polycondensation.

3. Oligomères et polymères selon la revendication 1 ou 2, **caractérisés en ce que** le composé (A) présente un poids équivalent époxyde de 70 à 1000 g/mole.

4. Oligomères et polymères selon l'une quelconque des revendications 1 à 3, **caractérisés en ce que** le silane (B) contient un radical (b1).

5. Oligomères et polymères selon l'une quelconque des revendications 1 à 4, **caractérisés en ce que** le silane (B) contient un radical (b1) divalent.

6. Oligomères et polymères selon l'une quelconque des revendications 1 à 5, **caractérisés en ce que** le silane (B) contient un groupe anhydride d'acide dicarboxylique (b2) cyclique.

7. Oligomères et polymères selon l'une quelconque des revendications 1 à 6, **caractérisés en ce que** le groupe anhydride d'acide dicarboxylique (b2) cyclique est un groupe anhydride d'acide succinique.

8. Oligomères et polymères selon l'une quelconque des revendications 1 à 7, **caractérisés en ce que** le silane (B) contient un groupe silane (b3).

9. Oligomères et polymères selon l'une quelconque des revendications 1 à 8, **caractérisés en ce que** le groupe silane (b3) contient au moins deux, en particulier trois, groupes hydrolysables (b31).

10. Oligomères et polymères selon l'une quelconque des revendications 1 à 9, **caractérisés en ce que** le rapport d'équivalents (a1):(b2) = 1,1 à 50.

11. Procédé pour la préparation d'oligomères et de polymères contenant des groupes époxyde et silane selon l'une quelconque des revendications 1 à 10, **caractérisé en ce qu'**on transforme
(A) au moins un composé oligomère ou polymère de bas poids moléculaire, contenant au moins deux groupes époxyde (a1)
(B) au moins un silane, contenant
(b1) au moins un radical organique au moins divalent, qui n'est pas hydrolysable en soi,
(b2) au moins un groupe anhydride d'acide dicarboxylique cyclique et
(b3) au moins un groupe silane, contenant au moins un groupe hydrolysable (b31),
où les groupes anhydride d'acide dicarboxylique cyclique (b2) sont liés via les radicaux (b1) avec les groupes silane (b3),
dans un rapport des équivalents de groupes époxyde (a1) aux groupes anhydride d'acide dicarboxylique (b2) = 0,7 à 100 dans un milieu aprotique ou en masse sous gaz inerte.

12. Procédé selon la revendication 11, **caractérisé en ce qu'**on réalise la transformation en présence d'un catalyseur.

13. Utilisation des oligomères et polymères contenant des groupes époxyde et silane selon l'une quelconque des revendications 1 à 10 ainsi que les oligomères et polymères contenant des groupes époxyde et silane préparés selon la revendication 11 ou 12 pour la préparation de mélanges durcissables exempts d'eau.

14. Utilisation selon la revendication 13, **caractérisée en ce que** les mélanges durcissables exempts d'eau contiennent au moins un composé chélaté.

15. Utilisation selon la revendication 14, **caractérisée en ce que** le composé chélaté est choisi dans le groupe constitué par les composés chélatés d'aluminium, de titane et de zirconium.

16. Utilisation selon l'une quelconque des revendications 13 à 15, **caractérisée en ce que** les mélanges durcissables exempts d'eau sont durcissables thermiquement ou thermiquement et par un rayonnement actinique.

17. Utilisation selon l'une quelconque des revendications 13 à 16, **caractérisée en ce que** les mélanges durcissables exempts d'eau contiennent des additifs, choisis dans le groupe constitué par les pigments conférant une couleur et/ou un effet, les charges organiques et inorganiques, transparentes ou opaques, les nanoparticules, d'autres liants oligomères et polymères durcissables physiquement, par oxydation, thermiquement, par un rayonnement actinique et thermiquement et par un rayonnement actinique, différents des oligomères et polymères contenant des groupes époxyde et silane, les réticulants pour le durcissement thermique, les diluants réactifs durcissables thermiquement et/ou avec un rayonnement actinique, les solvants organiques, aprotiques, de bas point d'ébullition et de point d'ébullition élevé ("longs"), les absorbants des UV, les agents de protection contre la lumière, les pièges de radicaux, les agents de désaération, les lubrifiants, les inhibiteurs de polymérisation, les photo-initiateurs, les initiateurs de la réticulation thermique, les antimousses, les émulsifiants, les agents mouillants et dispersants, les promoteurs d'adhérence, les agents d'étalement, les adjuvants filmogènes, les agents anticoulure (Sag control agents - SCA), les additifs contrôlant la rhéologie (épaississants), les agents ignifuges, les dessiccateurs, les déshydratants, les agents empêchant la formation de croûtes, les inhibiteurs de corrosion, les cires, les biocides et les agents de matage.

18. Utilisation selon l'une quelconque des revendications 13 à 17, **caractérisée en ce que** les mélanges durcissables exempts d'eau sont utilisés comme agents de revêtements, adhésifs, masses d'étanchéité, compounds à base de matériaux synthétiques techniques et mousses durcissables, de manière générale en particulier comme agents de revêtement.

19. Utilisation selon la revendication 18, **caractérisée en ce que** les substances de revêtement servent à la préparation de revêtements et laquages, les adhésifs servent à la préparation de couches adhésives, les masses d'étanchéité servent à la préparation de joints et les compounds à base des matériaux synthétiques techniques et les masses durcissables de manière générale servent à la préparation de pièces moulées, en particulier de pièces moulées optiques, de feuilles autoportantes et de mousses dures.
